# EUROPÄISCHE PATENTANMELDUNG

(11) **EP 1 940 009 A2**
(43) Veröffentlichungstag der Anmeldung: **02.07.2008**
(21) Anmeldenummer: 07121781.4
(22) Anmeldetag: 28.11.2007
(51) Int. Cl.: H02K 5/14, H01R 39/39

(54) **Kommutatormotor und Verfahren zur Montage eines Kommutatormotors**

(30) Priorität: 29.12.2006 DE 102006062587
(71) Anmelder: ROBERT BOSCH GMBH, 70442 Stuttgart (DE)
(72) Erfinder: Hawighorst, Achim, 77830 Buehlertal (DE)

(57) **Zusammenfassung**

Die Erfindung betrifft einen Kommutatormotor (10) mit einem eine Mehrzahl von Kommutatorlamellen aufweisenden, auf einer Ankerwelle (12) eines Ankers (13) drehfest montierten Kommutator (14) und mit auf einem Bürstenträger (20) montierten Bürsten (16), die mittels Andruckmitteln (18) an die Kommutatorlamellen anpressbar sind. Der Kommutatormotor (10) ist dadurch gekennzeichnet, dass Rückhaltemittel (22) vorgesehen sind, die die Bürsten (16) in einer Rückhalteposition zum Einführen des Ankers (13) halten und dass die Rückhaltemittel (22) die Bürsten (16) während der Montage der Einheit aus Bürstenträger (20) und Anker (13) in ein Gehäuse (28) oder einen Poltopf (30) des Kommutatormotors (10) zur elektrischen Kontaktierung der Kommutatorlamellen freigeben. Des weiteren betrifft die Erfindung ein Verfahren zur Montage eines Kommutatormotors (10) mit folgenden Schritten: Halten der Bürsten durch Rückhaltemittel (22) in einer Rückhalteposition, Einführen des Ankers (13) in den Bürstenträger (20) und Montage der Einheit aus Anker (13) und Bürstenträger (20) in ein Gehäuse (28) oder einen Poltopf (30) des Kommutatormotors (10) derart, dass die Bürsten (16) durch die Rückhaltemittel (22) zur elektrischen Kontaktierung der Kommutatorlamcllcn während der Montage freigegeben werden.

## Beschreibung

Die Erfindung betrifft einen Kommutatormotor sowie ein Verfahren zur Montage eines Kommutatormotors nach der Gattung der unabhängigen Ansprüche.

### Stand der Technik

Die Energieübertragung erfolgt bei Kommutatormotoren mittels Bürsten, die über geeignete Andruckmittel einen reibschlüssigen, elektrischen Kontakt zu einem eine Mehrzahl von Kommutatorlamellen aufweisenden, auf einer Ankerwelle eines Ankers drehfest montierten Kommutator herstellen, der seinerseits mit entsprechenden Wicklungen des Ankers elektrisch verbunden ist. Als Andruckmittel kommen dabei Spiral- oder Blattfedern oder dergleichen zum Einsatz, die an einem Bürstenträger befestigt sind und die die Bürsten derart mit einer Federkraft beaufschlagen, dass ihre Stirnflächen in der entspannten Ruhelage, also vor der Montage des Ankers, radial in Richtung des Ankerwellenmittelpunkts den gedachten Hüllkreis der Kommutatoroberfläche überschreiten.

Aufgrund der Vorspannung der Bürsten ergibt sich bei der Montage des Kommutatormotors das Problem, dass die Bürsten durch geeignete Rückhaltemittel soweit gegen die Federkraft der Andruckmittel zurückgehalten werden müssen, dass der Kommutator durch eine Bohrung des Bürstenträgers ohne mechanischen Kontakt zu den Bürsten hindurchgeführt werden kann.

Aus der DE 102 03 489 A1 ist eine Bürstenträgerplatte für einen Elektromotor bekannt, bei der die Führung der Bürsten in Köchern unter Federbelastung in radialer Richtung auf einen zentralen Durchbruch in der Bürstenträgerplatte hin erfolgt. Zur Montage des Elektromotors sind die Köcher von einer radial äußeren Vormontageposition in eine radial innere Endmontageposition verschiebbar auf der Bürstenträgerplatte angeordnet. Zudem werden die Bürsten in der Vormontageposition durch Haltemittel in den Köchern in einer radial äußeren Position gehalten und beim Verschieben der Köcher kurz vor der Endmontageposition freigegeben.

Die DE 199 45 788 A1 betrifft einen Elektromotor mit einer Ankerwelle, mit einem auf der Ankerwelle vorhandenen Kommutator, mit einer Bürstenträgerplatte, mit auf der Bürstenträgerplatte befestigten Köchern und mit in den Köchern geführten Bürsten, wobei die Führung der Bürsten unter Federbelastung in radialer Richtung auf einen zentralen Durchbruch in der Bürstenträgerplatte hin erfolgt. Darüber hinaus weist der Elektromotor einen axial verschiebbaren Haltering auf, an dessen äußerer Mantelfläche in einer Vormontageposition, d.h. insbesonder vor der Montage der Bürstenplatte, die Bürsten anliegen und in den Köchern gehalten werden. Der Haltering weist Rast- und Halteelemente auf, die in den Durchbruch der Bürstenträgerplatte greifen oder den Durchbruch hintergreifen, wobei der Haltering mittels der Rast- und Halteelemente in der Vormontageposition und in der Nachmontageposition, in der der Haltering die Bürsten durch axiale Verschiebung freigibt, gehalten wird.

Weiterhin ist aus der DE 103 55 982 A1 ein Bürstenhalter für Elektromotoren mit einem Kommutator bekannt, wobei der Bürstenhalter eine Tragplatte mit wenigstens einem Köcher aufweist, welcher eine Kohleführung für eine durch ein Federelement vorgespannten Kohle bildet. Eine Kohleverriegelung dient zum Verriegeln der Kohle gegen die Wirkung des Federelementes in einer zurückgezogenen Montageposition, wobei die Kohleverriegelung von einer federnden Zunge gebildet ist, die mit einer Rast am freien Ende der Zunge in die Kohleführung hineinreicht und bei verriegelter Kohle mit einer Gegenrast an der Kohle in Eingriff steht. Dabei sind die Formgebung der Rast und/oder der Gegenrast und/oder die Federkraft der Zunge derart gewählt, dass die verriegelte Kohle durch Überbrücken bzw. durch Einwirken einer axialen Kraft auf die Kohle entriegelbar ist.

### Offenbarung der Erfindung

Die Erfindung betrifft einen Kommutatormotor mit einem eine Mehrzahl von Kommutatorlamellen aufweisenden, auf einer Ankerwelle eines Ankers drehfest montierten Kommutator und mit auf einem Bürstenträger montierten Bürsten, die mittels Andruckmitteln an die Kommutatorlamellen anpressbar sind. Dadurch, dass Rückhaltemittel vorgesehen sind, die die Bürsten in einer Rückhalteposition zum Einführen des Ankers halten und dass die Rückhaltemittel die Bürsten während der Montage der Einheit aus Bürstenträger und Anker in ein Gehäuse oder einen Poltopf des Kommutatormotors zur elektrischen Kontaktierung der Kommutatorlamellen freigeben, ergibt sich der Vorteil des Wegfalls zusätzlicher Montagetätigkeiten bzw. Montagewerkzeuge, da die Montage nunmehr in einem kontinuierlichen Arbeitsgang erfolgen kann. Hierzu ist ein erfindungsgemäßes Verfahren vorgesehen, dass sich durch die folgenden Schritte auszeichnet:
- Halten der Bürsten durch die Rückhaltemittel in der Rückhalteposition,
- Einführen des Ankers in den Bürstenträger und
- Montage der Einheit aus Anker und Bürstenträger in ein Gehäuse oder einen Poltopf des Kommutatormotors derart, dass die Bürsten durch die Rückhaltemittel zur elektrischen Kontaktierung der Kommutatorlamellen während der Montage freigegeben werden.

Weitere Vorteile der Erfindung ergeben sich durch die in den abhängigen Ansprüchen angegebenen Merkmale sowie aus der Zeichnung und der nachfolgenden Beschreibung.

Ein sehr einfacher und fließender Montagevorgang ergibt sich in vorteilhafter Weise, wenn die Rückhaltemittel axial bezüglich der Ankerwelle beweglich gelagert sind. In diesem Zusammenhang weisen das Gehäuse oder der Poltopf Vorsprünge auf, die die Rückhaltemittel während der Montage axial bezüglich der Ankerwelle zur Freigabe der Bürsten bewegen.

Die Rückhaltemittel können radial in Richtung der Ankerwelle vor den Bürsten angeordnet sein. In einer alternativen Ausgestaltung ist es aber auch möglich, dass die Rückhaltemittel als Haltehaken ausgebildet sind, die radial bezüglich der Ankerwelle hinter den Bürsten angeordnet sind und die die Andruckmittel in der Rückhalteposition halten. Ebenso ist es denkbar, dass die Rückhaltemittel seitlich oder von oben in eine Vertiefung der Bürsten eingreifen. Dabei hängt die Wahl der Ausgestaltung von den räumlichen Gegebenheiten des Bürstenträgers bzw. des Kommutatormotors ab.

### Zeichnung

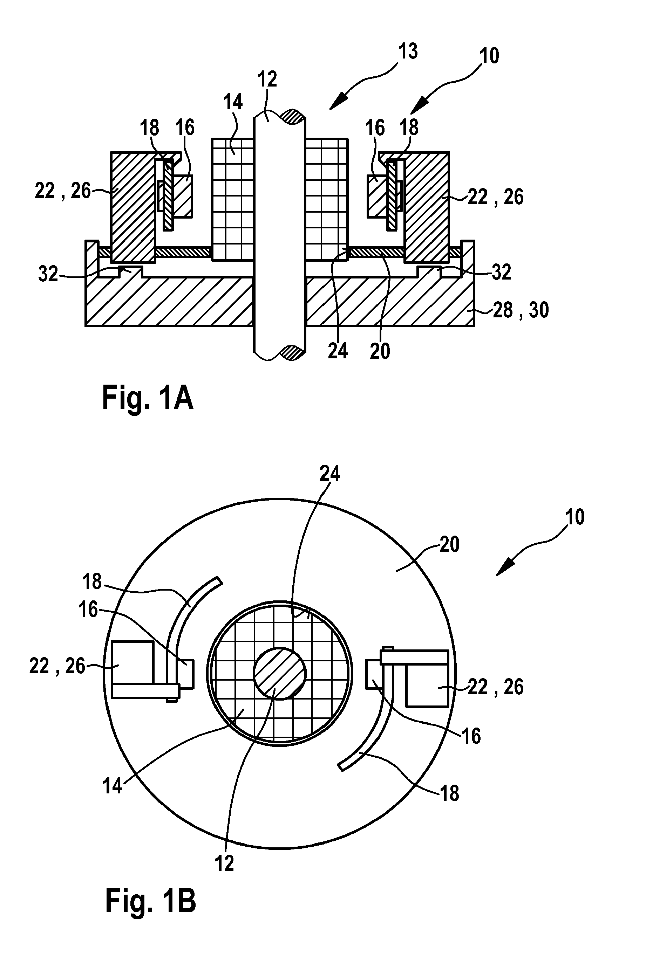

Die Erfindung wird im Folgenden anhand der Figuren 1 bis 4 beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination. Ein Fachmann wird diese Merkmale auch einzeln betrachten und zu weiteren sinnvollen Kombinationen zusammenfassen. Insbesondere wird ein Fachmann auch die Merkmale aus unterschiedlichen Ausführungsbeispielen zu weiteren sinnvollen Kombinationen zusammenfassen.

### Es zeigen

Fig. 1: ein erstes Ausführungsbeispiel des erfindungsgemäßen Kommutatormotors vor der Montage in einer Seitenansicht (Figur 1a) und in einer Draufsicht (Figur 1b),
Fig. 2: ein erstes Ausführungsbeispiel des erfindungsgemäßen Kommutatormotors nach der Montage in einer Seitenansicht (Figur 2a) und in einer Draufsicht (Figur 2b),
Fig. 3: ein zweites Ausführungsbeispiel des erfindungsgemäßen Kommutatormotors vor der Montage in einer Draufsicht (Figur 3a) und in zwei Seitenansichten (Figur 3b) und
Fig. 4: ein drittes Ausführungsbeispiel des erfindungsgemäßen Kommutatormotors vor der Montage in einer Draufsicht (Figur 4a) und in einer Seitenansicht (Figur 4b).

In Figur 1a ist ein erstes Ausführungsbeispiel des erfindungsgemäßen Kommutatormotors 10 vor der Montage in einer Seitenansicht im Schnitt durch den Mittelpunkt einer Ankerwelle 12 eines Ankers 13 gezeigt. Drehfest mit der Ankerwelle 12 ist ein Kommutator 14 mit einer Mehrzahl an seinem äußeren Umfang angebrachter Kommutatorlamellen verbunden, die ihrerseits eine Kommutierung des von Bürsten 16 eingespeisten Stroms in den nicht gezeigten Ankerwicklungen des Ankers 13 ermöglichen.

Die in diesem Fall als Hammerbürsten ausgebildeten Bürsten 16 sind über Andruckmittel 18, beispielsweise Blattfedern, an einem Bürstenträger 20 im Wesentlichen radial beweglich befestigt. Dabei beaufschlagen die Andruckmittel 18 die Bürsten 16 derart mit einer Federkraft, dass ihre Stirnflächen in der entspannten Ruhelage radial in Richtung des Mittelpunktes der Ankerwelle 12 den gedachten Hüllkreis der Oberfläche des mit der Ankerwelle 12 drehfest verbundenen Kommutators 14 überschreiten, wobei die Oberfläche aus der Mehrzahl der Kommutatorlamellen gebildet ist.

Auf dem Bürstenträger 20 sind Rückhaltemittel 22 vorgesehen, die die Bürsten 16 in einer Rückhalteposition zum Einführen des Ankers 13 halten, wobei der Anker 13 in Figur 1 bereits in eine Bohrung 24 des Bürstenträgers 20 eingeführt wurde. Die Rückhaltemittel 22 sind als Haltehaken 26 ausgebildet, die radial bezüglich der Ankerwelle 12 hinter den Bürsten 16 angeordnet sind und die die Andruckmittel 18 in der Rückhalteposition halten. Weiterhin sind die Rückhaltemittel 22 axial bezüglich der Ankerwelle 12 derart beweglich gelagert, dass sie während der Montage des Kommutatormotors 10 durch an einem Gehäuse 28 oder Poltopf 30 angebrachte Vorsprünge 32 axial bezüglich der Ankerwelle 12 zur Freigabe der Bürsten 16 bewegt werden. Auf diese Weise ist ein einfacher und schneller Montagevorgang ohne weiteres Montagewerkzeug oder weitere Montagetätigkeiten möglich.

Figur 1b zeigt das erste Ausführungsbeispiel des erfindungsgemäßen Kommutatormotors 10 vor der Montage in einer Draufsicht, so dass die Anordnung der beiden als Hammerbürsten ausgebildeten Bürsten 16 in Verbindung mit den jeweiligen Andruckmitteln 18 deutlich wird. Weiterhin ist hier zu erkennen, wo die als Haltehaken 26 ausgebildenten Rückhaltemittel 22 zum Halten der Bürsten 16 in der Rückhalteposition angreifen. Ohne Einschränkung der Erfindung ist es aber auch denkbar, dass die Haltehaken 26 nicht nur von oben sondern auch seitlich hinter die Rückhaltemittel 22 greifen. Zudem kann ihre Position radial hinter den Bürsten 16 in Abhängigkeit vom Bauraum auf dem Bürstenträger 20 variieren, d.h. zum Beispiel mittig oberhalb der Bürsten 16 oder dergleichen liegen.

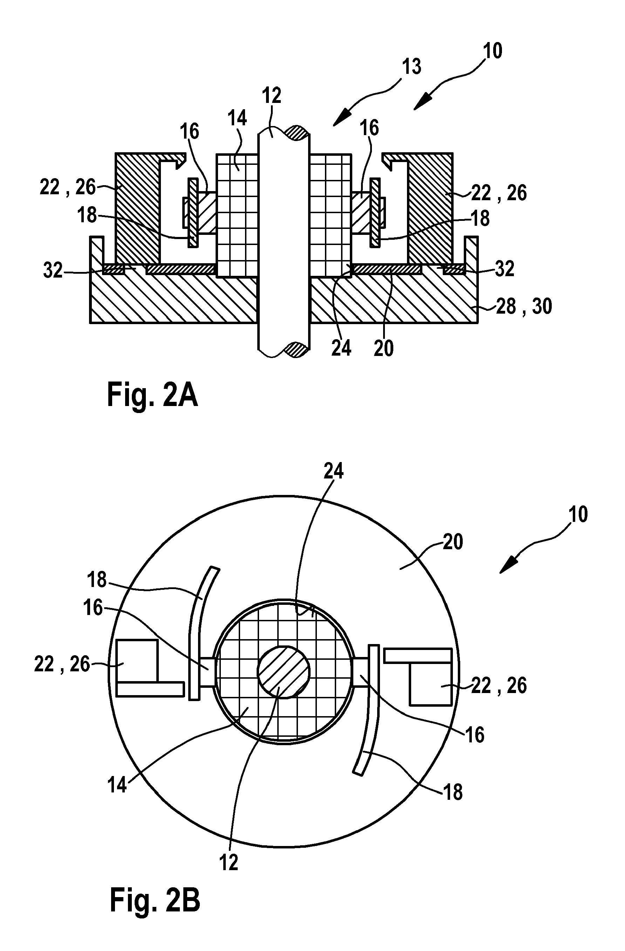

In Figur 2 wurden das Gehäuse 28 oder der Poltopf 30 nun soweit mit der Einheit aus Anker 13 und Bürstenträger 20 verbunden, dass die Vorsprünge 32 die jeweiligen als Haltehaken 26 ausgebildeten Rückhaltemittel 22 axial bezüglich der Ankerwelle 12 des Ankers 13 verschoben haben. Dies führte zu einer Freigabe der Bürsten 16, so dass diese ihrerseits aufgrund der durch die Andruckmittel 18 ausgeübten radialen Federkraft in elektrischen Kontakt mit den Kommutatorlamellen des Kommutatos 14 treten konnten.

Figur 2b verdeutlicht diesen Zustand nach der Montage des Kommutatormotors 10 in einer Draufsicht. Deutlich ist zu erkennen, dass die Rückhaltemittel 22 die Bürsten 16 zur Kontaktierung mit den Kommutatorlamellen des Kommutators 14 freigegeben haben.

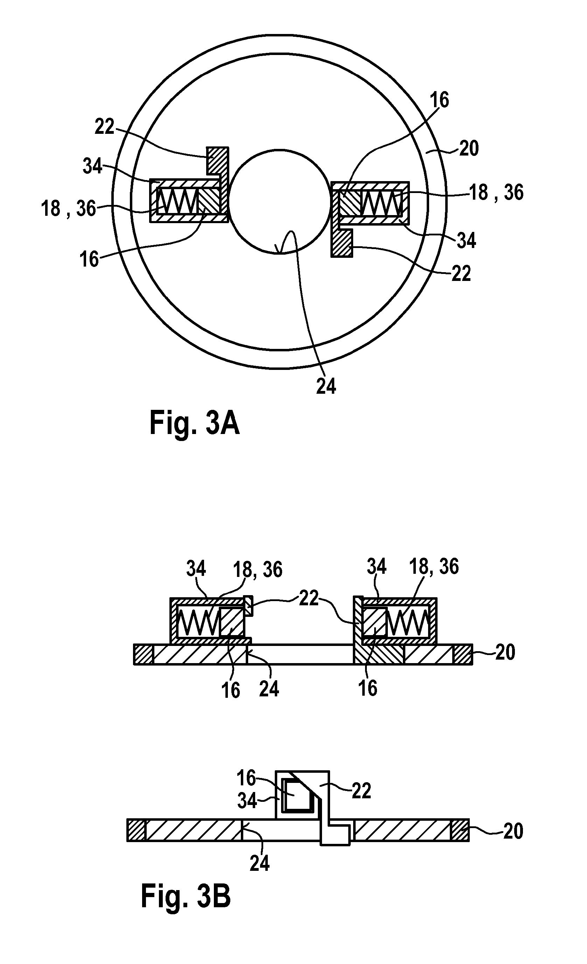

In Figur 3a ist ein zweites Ausführungsbeispiel des erfindungsgemäßen Kommutatormotors 10 bzw. des entsprechenden Bürstenträgers 20 vor der Montage in einer Draufsicht dargestellt. Statt als Hammerbürsten sind die Bürsten 16 nun in Gestalt von durch Köcher 34 radial geführten Bürsten ausgebildet, wobei die Andruckmittel 18 als Federn 36 arbeiten, die sich gegen die jeweiligen Rückseiten der Köcher 34 abstützen. Die Rückhaltemittel 22 sind hier radial in Richtung der nicht gezeigten Ankerwelle 12 vor den Bürsten 16 bzw. den Köchern 34 angeordnet und entsprechend axial bezüglich der Ankerwelle 12 beweglich gelagert. Da ihre Funktionsweise derjenigen gemäß der Figuren 1 und 2 entspricht, soll hierauf im Einzelnen nicht erneut eingegangen werden.

Figur 3b zeigt das zweite Ausführungsbeispiel in zwei verschiedenen Seitenansichten des Bürstenträgers 20. In der oberen Darstellung sind die Köcher 34 sowie die sich darin befindenden Bürsten 16 und Andruckmittel 18 in einem Schnitt durch die Köcher 34 zu erkennen, während die untere Darstellung den Köcher 34 von vorne zeigt. Insbesondere hier wird die Anordnung des Rückhaltemittels 22 in radialer Richtung der Ankerwelle vor der Bürste 16 deutlich. Dabei stellt die dargestellte Keilform nur eine mögliche Ausgestalltung des Rückhaltemittels 22 dar, so dass diese nicht als Einschränkung der Erfindung zu sehen ist.

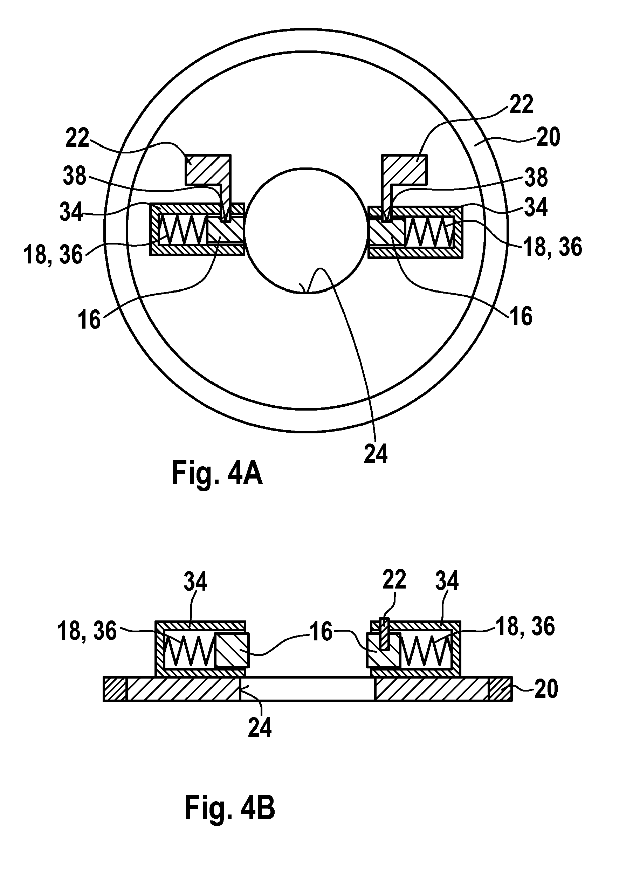

In Figur 4a ist ein drittes Ausführungsbeispiel des erfindungsgemäßen Kommutatormotors 10 bzw. des entsprechenden Bürstenträgers 20 vor der Montage in einer Draufsicht dargestellt. Im Unterschied zu Figur 3 sind die Rückhaltemittel 22 nun seitlich neben den Köchern 34 bzw. den Bürsten 16 angeordnet und greifen seitlich in eine Vertiefung 38 der Bürsten 16 ein. Wie auch schon in den vorherigen Ausführungsbeispielen sind die Rückhaltemittel 22 derart axial bezüglich der nicht gezeigten Ankerwelle 12 beweglich gelagert, dass sie während der Montage der aus dem Bürstenträger 20 und dem Anker 13 bestehenden Einheit in das Gehäuse 28 oder den Poltopf 30 durch die jeweiligen Vorsprünge 32 axial bewegt werden und die Bürsten 16 zur Kontaktierung der Kommutatorlamellen des in die Bohrung 24 des Bürstenträgers 20 eingeführten Kommutators 14 freigeben.

Figur 4b zeigt das dritte Ausführungsbeispiel in einer Seitenansicht. Dabei wird deutlich, dass das Rückhaltemittel 22 nicht nur seitlich sondern auch von oben in die Öffnung 38 der Bürste 16 eingreifen kann.

Es sei abschließend noch darauf hingewiesen, dass die gezeigten Ausführungsbeispiele weder auf die Figuren 1 bis 4 noch auf die gezeigte Form der Rückhaltemittel 22 beschränkt ist. Diese hängt beispielsweise von den räumlichen Gegenbenheiten des Bürstenträgers 20 und der Bürsten 16 ab. Weiterhin sei erwähnt, dass die Erfindung selbstverständlich nicht auf einen Kommutatormotor 10 mit zwei Bürsten 16 beschränkt ist. Ebenso kann sie auch auf einen Kommutatormotor 10 mit drei oder mehr als drei Bürsten 16 angewendet werden, wobei die Anzahl der Bürsten 16 vom jeweiligen Einsatzgebiet des Kommutatormotors 10 abhängt. So ist beispielsweise ein Kommutatormotor 10 mit drei Bürsten 16 in der Regel für zwei verschiedene Drehzahlen ausgelegt, wie sie insbesondere in Verbindung mit Scheibenwischer-Antrieben zum Einsatz kommen.

## Patentansprüche

1. Kommutatormotor (10) mit einem eine Mehrzahl von Kommutatorlamellen aufweisenden, auf einer Ankerwelle (12) eines Ankers (13) drehfest montierten Kommutator (14) und mit auf einem Bürstenträger (20) montierten Bürsten (16), die mittels Andruckmitteln (18) an die Kommutatorlamellen anpressbar sind, **dadurch gekennzeichnet, dass** Rückhaltemittel (22) vorgesehen sind, die die Bürsten (16) in einer Rückhalteposition zum Einführen des Ankers (13) halten und dass die Rückhaltemittel (22) die Bürsten (16) während der Montage der Einheit aus Bürstenträger (20) und Anker (13) in ein Gehäuse (28) oder einen Poltopf (30) des Kommutatormotors (10) zur elektrischen Kontaktierung der Kommutatorlamellen freigeben.

2. Kommutatormotor (10) nach Anspruch 1, **dadurch gekennzeichnet, dass** die Rückhaltemittel (22) axial bezüglich der Ankerwelle (12) beweglich gelagert sind.

3. Kommutatormotor (10) nach Anspruch 2, **dadurch gekennzeichnet, dass** das Gehäuse (28) oder der Poltopf (30) Vorsprünge (32) aufweist, die die Rückhaltemittel (22) während der Montage axial bezüglich der Ankerwelle (12) zur Freigabe der Bürsten (16) bewegen.

4. Kommutatormotor (10) nach einem der vorhergehenden Ansprüche, **dadurch gekennzeichnet, dass** die Rückhaltemittel (22) radial in Richtung der Ankerwelle (12) vor den Bürsten (16) angeordnet sind.

5. Kommutatormotor (10) nach einem der vorhergehenden Ansprüche 1 bis 3, **dadurch gekennzeichnet, dass** die Rückhaltemittel (22) als Haltehaken (26) ausgebildet sind, die radial bezüglich der Ankerwelle (12) hinter den Bürsten (16) angeordnet sind und die die Andruckmittel (22) in der Rückhalteposition halten.

6. Kommutatormotor (10) nach einem der vorhergehenden Ansprüche 1 bis 3, **dadurch gekennzeichnet, dass** die Rückhaltemittel (22) seitlich oder von oben in Vertiefungen (38) der Bürsten (16) eingreifen.

7. Verfahren zur Montage eines Kommutatormotors (10) mit einem eine Mehrzahl von Kommutatorlamellen aufweisenden, auf einer Ankerwelle (12) eines Ankers (13) drehfest montierten Kommutator (14) und mit auf einem Bürstenträger (20) montierten Bürsten (16), die mittels Andruckmitteln (18) an die Kommutatorlamellen anpressbar sind, **gekennzeichnet durch** folgende Schritte
- Halten der Bürsten **durch** Rückhaltemittel (22) in einer Rückhalteposition,
- Einführen des Ankers (13) in den Bürstenträger (20) und
- Montage der Einheit aus Anker (13) und Bürstenträger (20) in ein Gehäuse (28) oder einen Poltopf (30) des Kommutatormotors (10) derart, dass die Bürsten (16) **durch** die Rückhaltemittel (22) zur elektrischen Kontaktierung der Kommutatorlamellen während der Montage freigegeben werden.

8. Verfahren nach Anspruch 7, **dadurch gekennzeichnet, dass** die Rückhaltemittel (22) während der Montage durch an dem Gehäuse (28) oder dem Poltopf (30) angebrachte Vorsprünge (32) axial bezüglich der Ankerwelle (12) zur Freigabe der Bürsten (16) bewegt werden.
